(19) Europäisches Patentamt
European Patent Office
Office européen des brevets

(11) Publication number: 0 007 425
B1

(12) # EUROPEAN PATENT SPECIFICATION

(45) Date of publication of patent specification: 03.08.83

(21) Application number: 79101977.1

(22) Date of filing: 15.06.79

(51) Int. Cl.³: C 08 F 10/00, C 08 F 4/62, C 08 F 36/04, C 08 F 12/06

(54) **A process for producing a polymerisation catalyst and use of same for olefin polymerisation.**

(30) Priority: 24.07.78 US 927079
29.05.79 US 42251

(43) Date of publication of application:
06.02.80 Bulletin 80/3

(45) Publication of the grant of the patent:
03.08.83 Bulletin 83/31

(84) Designated Contracting States:
AT BE DE FR IT NL

(56) References cited:
FR - A - 2 311 032
GB - A - 1 085 679
GB - A - 1 401 708

(73) Proprietor: PHILLIPS PETROLEUM COMPANY
5th and Keeler
Bartlesville Oklahoma 74004 (US)

(72) Inventor: Capshew, Charles Edward
388 S.E. Fenway Place
Bartlesville, Oklahoma (US)

(74) Representative: Dost, Wolfgang, Dr.rer.nat., Dipl.-Chem. et al,
Patent- und Rechtsanwälte Bardehle-Pagenberg-Dost-Altenburg & Partner Postfach 86 06 20
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 007 425 B1

A process for producing a polymerization catalyst and use of same for olefin polymerization

In the production of polyolefins, such as for example polyethylene, polypropylene or ethylene-butene copolymers, an important aspect of the various processes and catalysts used to produce such polymers is the productivity. By productivity is meant the amount or yield of solid polymer that is obtained by employing a given quantity of catalyst. If the productivity is high enough then the amount of catalyst residues contained in the polymer is low enough that the presence of the catalyst residues does not significantly affect the properties of the polymer and the polymer does not require additional processing to remove the catalyst residues. As those skilled in the art are aware, removal of catalyst residues from polymer is an expensive process and it is very desirable to employ a catalyst which provides sufficient productivity so that catalyst residue removal is not necessary.

In addition, high productivities are desirable in order to minimize catalyst costs. Therefore, it is desirable to develop new and improved catalysts and polymerization processes which provide improved polymer productivities.

FR—A—2 311 032 describes an olefin polymerization catalyst prepared by the reaction of magnesium dichloride with titanium tetra-n-butoxide, suspension of this product in n-hexane and treatment with a solution of ethyl aluminium dichloride in n-heptane. The resulting product was used with triethyl aluminium as cocatalyst for the polymerization of propylene (Example 2).

In GB—A—1 401 708, a similar reaction product is used, with and without trisobutyl aluminium as cocatalyst, for the polymerization of ethylene (Example 1—6).

An object of the invention is a polymerization catalyst capable of providing improved polymer productivities as compared to prior art catalyst, in particular wherein the polymer produced contains catalyst residues in such low amount that catalyst residue removal is unnecessary.

Thus, the invention is a process of producing a polymerization catalyst which comprises reacting in an inert solvent or diluent (A) a metal halide compound selected from metal dihalides and metal hydroxyhalides of metals of Group IIA or IIB of the Mendeleev Periodic Table, and (B) a titanium compound, the titanium metal being bonded to at least one oxygen, nitrogen or sulfur atom, said oxygen, nitrogen or sulfur atoms in turn being bonded to a carbon atom of a carbon containing radical, to obtain a first catalyst component, and then precipitating said first catalyst component with a second catalyst component which is an organometallic compound of a metal of Group I, II or III of the Mendeleev Periodic Table, which process is characterized by treating the solid product resulting from the combination of said first and second catalyst components with (C) a transition metal halide as halide ion exchanging source.

The comparative runs (see Table 4) show the surprisingly better results of the inventive catalysts over the known catalyst not subjected to the halide ion exchanging source treatment.

As used herein the term "Mendeleev Periodic Table" refers to the Periodic Table of the Elements as shown in the inside front cover of Perry, *Chemical Engineer's Handbook,* 4th Edition, McGraw Hill & Co. (1963).

As noted above the metal halide compound (A) is selected from metal dihalides and metal hydroxyhalides and the metal of the metal halide compound is selected from Group IIA and Group IIB metals, such as for example beryllium, magnesium, calcium and zinc. Some suitable metal halide compounds include for example, beryllium dichloride, beryllium dibromide, beryllium hydroxyiodide, magnesium dichloride, magnesium dibromide, magnesium hydroxychloride, magnesium diiodide, magnesium difluoride, calcium dichloride, calcium dibromide, calcium hydroxybromide, zinc dichloride, zinc difluoride, and zinc hydroxychloride, while metal hydroxyhalide compounds are known in the art, they are not as common and as readily available as metal dihalide compounds; therefore, metal dihalides are preferred. Of the metal dihalides, magnesium dihalides, and particularly magnesium dichloride is preferred because it is readily available and relatively inexpensive and has provided excellent results. The metal dihalide component is generally used in the form of an anhydrous, particulate solid to facilitate its reaction with the transition metal compound. It is also noted that various techniques for converting a metal halide compound to a fine particulate form, such as for example roll milling, reprecipitating, etc., can be used to prepare the metal halide compound for use according to the present invention and that such additional preparation of the metal halide compound promotes the reaction of the metal halide compound with the titanium compound; however, it does not appear to make any difference in a catalyst of the present invention prepared from a composition of matter of the present invention if the metal halide compound is in a fine particulate form, that is, polymer productivity for example is not a function of the size of the particles of the metal halide compound. Preparation of metal hydroxyhalide compounds are described in K. Soga, S. Katano, Y. Akimoto and T. Kagiya, "Polymerization of alpha-Olefins with Supported Ziegler-type Catalysts", *Polymer Journal,* Vol. 2, No. 5, pp. 128—134 (1973).

Hereinafter the titanium compound (B) is also referred to as transition metal compound. Some of the titanium compounds suitable for use in the invention include for example titanium tetrahydrocarbyloxides, titanium tetraimides, titanium tetraamides and titanium tetramercaptides.

The titanium tetrahydrocarbyloxides are the preferred titanium compounds because they produce

excellent results and are readily available. Suitable titanium tetrahydrocarbyloxide compounds include those expressed by the general formula

$$Ti(OR)_4$$

wherein each R is individually selected from an alkyl, cycloalkyl, aryl, alkaryl, and saturated aralkyl hydrocarbon radical containing from 1 to 20 carbon atoms per radical and each R can be the same or different. Titanium tetrahydrocarbyl oxides in which the hydrocarbyl group contains 1 to 10 carbon atoms per radical are most often employed because they are more readily available. Suitable titanium tetrahydrocarbyloxides include, for example, titanium tetramethoxide, titanium dimethoxydiethoxide, titanium tetraethoxide, titanium tetra-n-butoxide, titanium tetrahexyloxide, titanium tetradecyloxide, titanium tetraeicosyloxide, titanium tetracyclohexyloxide, titanium tetrabenzyloxide, titanium tetra-p-tolyloxide and titanium tetraphenoxide.

Of the titanium tetrahydrocarbyloxides, titanium tetraalkoxides are generally preferred and titanium tetraethoxide is particularly preferred because of the excellent results obtained employing this material. Titanium tetraethoxide is also generally available at a reasonable cost.

The molar ratio of the transition metal compound, i.e., the titanium compound (B) to the metal halide compound (A) can be selected over a relatively broad range. Generally the molar ratio is within the range of 10:1 to 1:10, however, the most common molar ratios are within the range of 2:1 to 1:2. When titanium tetrahydrocarbyloxide and magnesium dichloride are employed to form a composition of matter of the invention, a molar ratio of titanium to magnesium of about 2:1 is presently recommended as all the magnesium compound apparently goes into solution easily.

The metal halide compound and the transition metal compound employed in the present invention are normally mixed together by heating, e.g. refluxing, these two components together in a suitable dry (essential absence of water) solvent or diluent, which is essentially inert to these components and the product produced. For example, the catalyst is prepared by mixing together a metal halide compound and a transition metal compound in a suitable solvent to produce a first catalyst component solution, the first catalyst component solution is heated, cooled and optionally filtered in order to remove any undissolved material; a second catalyst component comprising an organometallic compound is added to the above-described first catalyst component solution in a manner so as to avoid a significant temperature rise in the solution to produce a solid catalyst in the form of a slurry with the hydrocarbon solvent; and the solid catalyst separated from the slurry, washed with a hydrocarbon compound and dried, wherein all the above steps are carried out in the essential absence of air and water. By the term "inert" is meant that the solvent does not chemically react with the dissolved components such as to interfere with the formation of the product or the stability of the product once it is formed. Such solvents or diluents include, for example, n-pentane, n-heptane, methylcyclohexane, toluene and xylenes. It is emphasized that aromatic solvents are preferred, such as for example xylene because the solubility of the metal halide compound and the transition metal compound is higher in aromatic solvents as compared to aliphatic solvents, particularly at low temperatures, which as described hereinafter, are preferred when mixing the metal halide compound and the transition metal compound in the solvent with an organometallic compound. Such mixing temperatures are generally within the range of from 0°C to −100°C and preferably from −15°C to −40°C. It is also noted that as compared to aliphatic solvents the use of aromatic solvents, such as for example xylene, appears to improve production of larger polymer particles and/or polymer particles with improved resistance to attrition when the composition resulting from the chemical combination of the metal halide compound and the transition metal compound is used to produce a polymerization catalyst as described herein. Generally the amount of solvent or diluent employed can be selected over a broad range. Usually the amount of solvent or diluent is within the range of 20 to 100 ml per gram of metal dihalide. The temperature employed during the heating step can also be selected over a broad range. Normally the heating temperature is within the range of 15°C to 150°C when the heating step is carried out at atmospheric pressure. Obviously the heating temperatures employed would be higher if the pressure employed is above atmospheric pressure. The pressure employed during the heating step does not appear to be a significant parameter. In addition to the above noted solvents or diluents, more polar solvents or diluents such as nitrobenzene and halogenated hydrocarbons, e.g. methylene chloride, chlorobenzene and 1,2-dichloroethane can be used, particularly when producing compositions of the invention having a molar ratio of the transition metal compound to the metal dihalide compound of other than 2:1. Generally, the time required for heating these two components together is within the range of 5 minutes to 10 hours, although in most instances a time within the range of 15 minutes to 3 hours is sufficient. Following the heating operation, the resulting solution can be filtered to remove any undissolved material or extraneous solid, if desired. The first catalyst component thus produced and which is in solution can be recovered from the solvent or diluent by crystallation or other suitable means.

It is also emphasized that the first catalyst component is prepared in an oxygen free system e.g., absence of air as well as a dry system i.e., absence of water. Generally a dry box is employed as known in the art to prepare the first catalyst component usually employing a dry oxygen free nitrogen atmosphere.

With respect to the first catalyst component the following example is provided for purposes of illustration.

First catalyst component preparation

2 moles of titanium tetraethoxide and 1 mole of magnesium dichloride are reacted in hydrocarbon solution. All mixing, filtering and washing operations were conducted in a dry box under a nitrogen atmosphere. Anhydrous, powdered magnesium dichloride amounting to 4.758 g (0.050 mole) was roll milled and mixed with 23.010 g (0.101 mole) of titanium tetraethoxide in 200 ml of dry n-heptane in a flask equipped for stirring and refluxing. Under a nitrogen purge, the mixture was stirred, heated to refluxing temperature, refluxed for 45 minutes and cooled to room temperature to yield a solution containing a very small amount of undissolved residue. The reaction mixture was suction filtered to remove the residue to obtain a clear, colorless solution. The solution contained in a flask was first cooled in an ice bath to a temperature of about 0°C and then to a temperature of about −22°C using a freezer to yield a relatively small crop of crystals. To increase the yield, the mother liquor was heated to boiling under a nitrogen purge to remove about 1/3 of the volume by evaporation. The resulting solution was cooled to room temperature, then to −22°C and finally to about −78°C in a dry ice-isopropanol bath for about 1 hour. The mother liquor was pumped off the crystals that had formed and the crystals were rinsed off with three 20 ml portions of dry n-hexane cooled to about −78°C. The liquid remaining after the last rinse was pumped off and the product was dried overnight under a nitrogen purge to obtain 23.6 g of white crystals amounting to 85% of the theoretical yield.

Elemental analysis of a portion of the composition was performed with the following results, in terms of wt. %.

| | C | H | Cl | Mg | Ti | O |
|---|---|---|---|---|---|---|
| Calculated | 34.84 | 7.32 | 12.85 | 4.41 | 17.37 | 23.21 |
| Found | 32.02 | 7.21 | 13.3 | 3.88 | 17.3 | — |

The results indicate that a composition having a formula consistent with $2Ti(OC_2H_5)_4 . MgCl_2$ was formed and recovered. Thus the composition apparently had a molar ratio of two moles of titanium to one mole of magnesium.

A sample of the white crystals was analyzed by powder X-ray diffraction under conditions to exclude the presence of air and water. The sample revealed the following characteristics:

TABLE 1

| Interplanar spacing (meter$\times 10^{-10}$) | Relative intensity of spectrum |
|---|---|
| 10.77 | weak |
| 10.47 | very strong |
| 9.28 | very weak |
| 8.73 | weak |
| 8.23 | very strong |
| 8.10 | moderate |
| 7.91 | very strong |
| 7.43 | strong |
| 7.27 | strong |
| 6.52 | weak |
| 6.41 | weak |
| 6.10 | weak |
| 4.90 | very weak |
| 4.42 | very weak |
| 4.40 | very weak |
| 4.09 | very weak |
| 3.86 | very weak |

The interplanar spacing lines were sharp and in view of the above number of interplanar spacings it is apparent that the composition formed has essentially a crystalline structure.

It is noted that the first catalyst component need not be recovered from the diluent or solvent, such as by crystallation, prior to using such material to produce the catalysts of the present invention. Good results have been obtained by employing the first catalyst component solution as obtained as well as by employing the first catalyst component recovered from the diluent or solvent.

The second catalyst component is an organometallic compound in which the metal is selected from metals of Groups I to III of the Mendeleev Periodic Table. Some suitable organometallic compounds include, for example, lithium alkyls, Grignard reagents, dialkyl magnesium compounds,

dialkyl zinc compounds and organoaluminum compounds. The second catalyst component is generally an organoaluminum halide compound which includes for example, dihydrocarbylaluminum monohalides of the formula $R'_2AlX$, monohydrocarbylaluminum dihalides of the formula $R'AlX_2$ and hydrocarbylaluminum sesquihalides of the formula $R'_3Al_2X_3$ wherein each R' in the above formulas is individually selected from linear and branched chain hydrocarbyl radicals containing from 1 to 20 carbon atoms per radical and can be the same or different and each X is a halogen atom and can be the same or different. Some suitable organoaluminum halide compounds include, for example, methylaluminum dibromide, ethylaluminum dichloride, ethylaluminum diiodide, isobutylaluminum dichloride, dodecylaluminum dibromide, dimethylaluminum bromide, diethylaluminum chloride, diisopropylaluminum chloride, methyl-n-propylaluminum bromide, di-n-octylaluminum bromide, diphenylaluminum chloride, dicyclohexylaluminum bromide, dieicosylaluminum chloride, methylaluminum sesquibromide, ethylaluminum sesquichloride and ethylaluminum sesquiiodide. Ethylaluminum sesquichloride, ethylaluminum dichloride, and diethylaluminum chloride have been employed with good results and are preferred. The most preferred organoaluminum halide compound is ethylaluminum sesquichloride, which produced the best results.

The metal halide compound (A) transition metal compound (B) solution described above (which is formed by dissolving the recovered first catalyst component in a suitable solvent or which is formed initially without recovering the first catalyst component from the solvent) is then contacted with a hydrocarbon solution containing the organometallic compound of the second component of the catalyst. A solid reaction product is formed which precipitates out of the solution.

The molar ratio of the transition metal compound, i.e., the titanium compound (B) of the first catalyst component to the organometallic component of the second catalyst component can be selected over a relatively broad range. Generally, the molar ratio of the transition metal of the first catalyst component to the organometallic component of the second catalyst component is within a range of from 10:1 to 1:10 and more generally within a range of 2:1 to 1:3 since a molar ratio within the latter range usually produces a catalyst which can be employed as an especially active ethylene polymerization catalyst.

The temperature employed while mixing the first and second catalyst components as above described can be selected over a broad range. Generally the temperature employed is within a range of −100°C to 50°C or higher, while temperatures within the range of −10°C to 30°C were most often employed, additional investigation has surprisingly established that the use of a temperature within the range of −100°C to about 0°C for mixing the first and second catalyst components together results in the production of larger polymer particles and/or polymer particles with improved resistance to attrition as compared to polymer produced with a catalyst where the first and second catalyst components were mixed together at a temperature above 0°C. As the data hereinafter indicates polymer particles of good size were produced employing a mixing temperature for the first and second catalyst components within the range of from −15°C to −40°C and mixing temperatures within this range are preferred. Since heat is evolved when the first catalyst component and the second catalyst component are mixed, the mixing rate is adjusted as required and additional cooling is employed in order to maintain a relatively constant mixing temperature. It is noted with respect to mixing the first and second components that the order of addition is not important and either component can be added to the other. After completing the mixing, the resulting slurry is stirred or agitated for a sufficient time, generally within a range of 15 minutes to 5 hours to insure that mixing of the components is complete. It is recommended that the stirring or agitation be carried out whereby the slurry is maintained at the mixing temperatures for the first 10 to about 30 minutes after mixing and then gradually raising the temperature of the slurry to ambient temperature for the remainder of the stirring or agitation period. Thereafter, stirring is discontinued and the solid product recovered by filtration, decantation, and the like. The product is then washed with a suitable material such as a hydrocarbon, e.g., n-pentane, n-heptane, cyclohexane, benzene or xylenes, to remove any soluble material which may be present. The product is then dried and stored under dry nitrogen.

According to the present invention, the reaction product resulting from the combination of the first and second catalyst components is treated with a transition metal halide as halide ion exchanging source. Some examples of suitable halide ion exchanging sources are titanium tetrachloride, vanadium oxychloride ($VOCl_3$) and zirconium tetrachloride. Because titanium tetrachloride is readily available and produced excellent results after somewhat extensive experimentation, it is preferred.

Generally, the treatment with the halide ion exchanging source takes place in a suitable diluent such as a hydrocarbon diluent, for example, n-pentane, n-heptane, cyclohexane, benzene or xylenes, to facilitate the treating process. The treating temperature can be selected over a relatively broad range and is normally within a range of 0°C to 200°C; however, surprisingly it has also been found that employing a temperature within the range of 80°C to 180°C the use of the obtained catalyst results in the production of larger polymer particles and/or polymer particles with improved resistance to attrition as compared to polymer produced with a catalyst prepared at a lower treating temperature. In view of the above discovery the preferred treating temperature with the halide ion exchanging source is from 100°C to 130°C when considering the over-all catalyst performance. While the use of treating temperatures in excess of 130°C, such as for example 150°C to 180°C, produces catalysts that

provide larger and/or more attrition resistant polymer particles as compared to polymer particles produced with catalysts prepared at treating temperatures of 130°C and below, catalysts produced with treating temperatures of 150°C to 180°C also show a marked reduction in productivity as compared to catalysts prepared at treating temperatures of 130°C and below.

It is also noted that particularly good results have been obtained employing the low mixing temperatures for mixing the first and second catalyst components together as described above to produce a solid reaction product which is subsequently treated with a halide ion exchanging source employing the high treating temperatures also described above. For example use of a mixing temperature within the range of 0°C to −100°C for mixing the first and second catalyst components together (preferably in an aromatic solvent) and then using a treating temperature within the range of 80°C to 180°C for treating the reaction product with the halide ion exchanging source results in a catalyst which produces especially large and/or attrition resistant polymer particles.

The treating time can also be selected over a broad range and generally is within the range of 10 minutes to 10 hours. While the weight ratio of the halide ion exchanging source to the reaction product of the first and second catalyst components can be selected over a relatively broad range, the weight ratio of the halide ion exchanging source to said reaction product is generally within a range of 10:1 to 1:10 and more generally from 7:1 to 1:4. Following the treatment of said reaction product with the halide ion exchanging source the surplus halide ion exchanging source (the halide ion exchanging source which is not bound to the obtained catalyst) is removed by washing the catalyst with a dry (essential absence of water) liquid such as a hydrocarbon of the type previously disclosed, n-hexane, or xylene for example. The resulting catalyst, after drying, is stored under dry nitrogen.

It has been found that catalyst can be stored for a month or longer without any significant decrease in activity.

If desired, the catalyst can be admixed with a particulate diluent such as, for example, silica, silica-alumina, silica-titania, magnesium dichloride, magnesium oxide, polyethylene, polypropylene, and poly(phenylene sulfide), prior to using the catalyst in a polymerization process. While the weight ratio of the particulate diluent to the catalyst can be selected over a relatively wide range, the weight ratio of particulate diluent to catalyst generally is within the range of 100:1 to 1:100. More often, the weight ratio of particulate diluent to catalyst is within the range of 20:1 to 2:1 and use of a particulate diluent has been found effective to facilitate charging of the catalyst to the reactor.

While it may not be necessary in all instances to employ a cocatalyst with the catalyst of the present invention, the use of cocatalysts is recommended for best results. The organometallic cocatalysts suitable for use in accordance with the invention are the same as the organometallic compounds suitable for use as the second component of the catalyst of the present invention previously described and in addition to organometallic compounds represented by the general formulas $R''AlX_2$, $R''_2AlX$ and $R''_3Al_2X_3$, suitable cocatalysts also include compounds of the formula $R''_3Al$ in which $R''$ is the same as $R'$ defined above. Of the organometallic cocatalysts, the organoaluminum cocatalysts are preferred and in addition to those described above as suitable for use as the second component of the catalyst the additional organoaluminum compounds of the formula $R''_3Al$ include, for example, trimethylaluminum, triethylaluminum, triisopropylaluminum, tridecylaluminum, trieicosylaluminum, tricyclohexylaluminum, triphenylaluminum, 2-methylpentyldiethylaluminum, and triisoprenylaluminum. Triethylaluminum is preferred since this compound produced excellent results in the runs hereafter described.

The molar ratio of the organometallic compound of the cocatalyst to the transition metal compound, i.e., the titanium compound (B) of the first catalyst component is not particularly critical and can be selected over a relatively broad range. Generally, the molar ratio of the organometallic compound of the cocatalyst to the transition metal, compound of the first catalyst component is within a range of 1:1 to 1500:1. However, it has been found that generally when relatively high amounts of the cocatalyst is employed in relation to the catalyst larger and/or more attrition resistant polymer particles are produced. For example, larger and/or more attrition resistant particles are produced when the weight ratio of cocatalyst to catalyst employed is at least 4:1 up to 400:1 and higher; however, weight ratios of cocatalyst to catalyst within the range of 6:1 to 100:1 are generally recommended as the best compromise between particle size and/or attrition resistance and polymer production since it has been found that generally the higher the cocatalyst level the lower the polymer production per unit weight of catalyst.

A variety of polymerizable compounds are suitable for use in the process of the present invention. Olefins which can be homopolymerized or copolymerized with the invention catalysts include aliphatic mono-l-olefins. While the invention would appear to be suitable for use with any aliphatic mono-l-olefin, those olefins having 2 to 18 carbon atoms are most often used. The mono-l-olefins can be polymerized according to the present invention employing either a particle form process or a solution form process. Aliphatic mono-l-olefins can be copolymerized with other l-olefins and/or with other smaller amounts of other ethylenically unsaturated monomers, such as butadiene 1,3, isoprene, pentadiene-1,3, styrene, alpha-methylstyrene, and similar ethylenically unsaturated monomers which do not impair the catalyst.

The catalysts of this invention can also be utilized to prepared homopolymers and copolymers of

conjugated diolefins. Generally the conjugated diolefins contain 4 to 8 carbon atoms per molecule. Examples of suitable conjugated diolefins include 1,3-butadiene, isoprene, 2-methyl-1,3-butadiene, 1,3-pentadiene, and 1,3-octadiene. Suitable comonomers, besides the conjugated diolefins listed above include mono-l-olefins previously described and vinylaromatic compounds generally. Some suitable vinylaromatic compounds are those having from 8 to 14 carbon atoms per molecule, and include for example styrene and various alkylstyrenes, such as 4-ethylstyrene and such as 1-vinylnaphthalene.

The weight percent of the conjugated diolefin in the copolymerization mixture can be selected over a relatively broad range. Generally the weight percent of the conjugated diolefin is from 10 to 95 weight percent and the other comonomers are from 90 to 5 weight percent. However, the weight percent of the conjugated diolefin is preferably from 50 to 90 weight percent and the other comonomers are from 50 to 10 weight percent.

In one aspect of the invention, the catalysts of the present invention have been found to be particularly effective for polymerization of mono-1-olefins such as ethylene as extremely high productivities have been obtained and thus mono-1-olefins such as ethylene are the preferred monomers for use with the catalysts of the present invention.

The polymerization process according to the present invention employing the catalysts and cocatalysts as above described can be performed either batchwise or continuously. In a batch process, for example, a stirred autoclave is prepared by first purging with nitrogen and then with a suitable compound, such as isobutane for example. When the catalyst and cocatalyst are employed either can be charged to the reactor first or they can be charged simultaneously through an entry port under an isobutane purge. After closing the entry port, hydrogen, if used, is added, and then a diluent such as isobutane is added to the reactor. The reactor is heated to the desired reaction temperature, which for polymerizing ethylene, for example, is, for best results, generally within a range of 50°C to 120°C and the ethylene is then admitted and maintained at a partial pressure within a range of 5/10 MPa to 5.0 MPa (70—725 psig) for best results. At the end of the designated reaction period, the polymerization reaction is terminated and the unreacted olefin and isobutane are vented. The reactor is opened and the polymer, such as polyethylene, is collected as a free-flowing white solid and is dried to obtain the product.

In a continuous process, for example, a suitable reactor such as a loop reactor is continuously charged with suitable quantities of solvent or diluent, catalyst, cocatalyst, polymerizable compounds and hydrogen if any and in any desirable order. The reactor product is continuously withdrawn and the polymer recovered as appropriate, generally by flashing the diluent (solvent) and unreacted monomers and drying the resulting polymer.

The olefin polymers made with the catalysts of this invention are useful in preparing articles by conventional polyolefin processing techniques such as injection molding, rotational molding, extrusion of film, and the like. For example, polyethylene made with the catalysts of this invention is typically of narrow molecular weight distribution which is especially desirable for injection molding applications. Furthermore, the polyethylene produced as described generally has a desirable high bulk density of about 0.44 g/ml as recovered from the polymerization zone. In addition, the polyethylene produced as described is characterized by a high degree of stiffness, e.g. high flexural modulus, whch is also desirable in many applications.

Hereinafter the reaction product obtained from the reaction of the first and second catalyst components, i.e., before the treatment with the halide ion exchanging source, is designated "Catalyst A" whereas the product obtained after the treatment with said halide ion exchanging source (inventive catalyst) is designated "Catalyst B".

## Examples

### Example 1

Catalyst A preparation (comparative)

All mixing and filtering operations were performed in a dry box (essential absence of air, i.e. oxygen, and water) under a dry nitrogen atmosphere employing dry n-heptane as the reaction medium. Anhydrous magnesium dichloride and titanium tetraethoxide (unless otherwise noted) were charged to a flask equipped for refluxing and stirring the contents of the flask. The mixture was brought to reflux temperature (about 100°C), refluxed for the time shown in Table 2, cooled and filtered if extraneous or undissolved material was present. The product was cooled in an ice bath and the indicated organoaluminum halide compound was added to the product at a rate sufficient to avoid a significant temperature rise to produce a slurry. The resulting slurry was stirred about 30 minutes after removal of the flask from the ice bath. The slurry was filtered to produce a filter cake which was washed with portions of dry n-hexane and dried under a nitrogen purge to produce the product.

The quantities of the materials employed, weight and mole ratios of reactants charged and Catalysts A obtained are given in Table 2.

TABLE 2
Preparation of catalysts A

| Catalyst designation | A-1 | A-2 | A-3 | A-4 | A-5 |
|---|---|---|---|---|---|
| $MgCl_2$ | | | | | |
| Grams | 0.950 | 9.518 | 0.955 | 2.856 | 2.856 |
| mole | 0.010 | 0.100 | 0.010 | 0.030 | 0.030 |
| $Ti(OR)_4$ (1) | | | | | |
| grams | 4.460 | 45.59 | 4.554 | 13.673 | 13.673 |
| mole | 0.0196 | 0.200 | 0.020 | 0.060 | 0.060 |
| 2nd Catalyst component | | | | | |
| Type | EASC(2) | EASC(2) | EADC(3) | EADC(3) | DEAC(4) |
| ml | 17.5 | 250 | 13.5 | 27 | 52 |
| mole | 0.0140 | 0.200 | 0.020 | 0.040 | 0.0393 |
| Reaction diluent(7) | | | | | |
| ml | 30 | 550 | 60 | 150 | 150 |
| Reflux, min. | 20 | 45 | 60 | 60 | 60 |
| Wash liquid(6) | | | | | |
| ml | 50 | 600 | 40 | 50 | 50 |
| Mole ratios | | | | | |
| Ti/Mg | 1.96:1 | 2:1 | 2:1 | 2:1 | 2:1 |
| Ti/2nd catalyst comp. | 1.4:1 | 1:1 | 1:1 | 1.5:1 | 1.53:1 |
| Recovered product | | | | | |
| grams | 2.948 | 25.54 | 2.925 | 3.136 | 2.868 |
| Color | off-white | brown | white | pink-brown | lt. brown |

TABLE 2 (contd.)
Preparation of catalysts A

| Catalyst designation | A-6 | A-7 | A-8 | A-9 | A-10 |
|---|---|---|---|---|---|
| $MgCl_2$ | | | | | |
| Grams | 0.952 | 0.952 | 9.516 | 0.952 | 0.952 |
| mole | 0.010 | 0.010 | 0.100 | 0.010 | 0.010 |
| $Ti(OR)_4$ (1) | | | | | |
| grams | 4.540 | 4.540 | 45.60 | 3.403 | 4.54 |
| mole | 0.020 | 0.020 | 0.200 | 0.010 | 0.02 |
| 2nd Catalyst component | | | | | |
| Type | DEAC(4) | i-BADC(5) | EASC(2) | EASC(2) | EASC(2) |
| ml | 26.5 | 16.7 | 250 | 12.5 | 12.0 |
| mole | 0.020 | 0.020 | 0.200 | 0.010 | 0.01 |
| Reaction diluent(7) | | | | | |
| ml | 60 | 60 | 530 | 60 | 50 |
| Reflux, min. | 60 | 60 | 60 | 80 | 45 |
| Wash liquid(6) | | | | | |
| ml | 60 | 50 | 250 | 30 | 30 |
| Mole ratios | | | | | |
| Ti/Mg | 2:1 | 2:1 | 2:1 | 1:1 | 2:1 |
| Ti/2nd catalyst comp. | 1:1 | 1:1 | 1:1 | 1:1 | 2:1 |
| Recovered product | | | | | |
| grams | 2.615 | 2.828 | 29.440 | 1.350 | 3.250 |
| Color | cream | white | lt. brown | lt. brown | lt. yellow |

Notes:
(1) $Ti(OR)_4$ in catalysts A-1 through A-8 and A-10 was $Ti(OC_2H_5)_4$. In catalyst A-9, it was $Ti(O\ n\text{-}C_4H_9)_4$.
(2) EASC is ethylaluminum sesquichloride, 25 wt. % in n-heptane.
(3) EADC is ethylaluminum dichloride, 25 wt. % in n-hexane.
(4) DEAC is diethylaluminum chloride, 12.96 wt. % in n-hexane.
(5) i-BADC is isobutylaluminum dichloride, 25.4 wt. % in n-hexane.
(6) n-Hexane.
(7) n-Heptane.

Catalyst B preparation (invention)

All mixing and filtering operations were conducted in a dry box under a nitrogen atmosphere employing dry-n-hexane as the reaction medium. To a flask equipped for stirring was charged the n-hexane, Catalyst A and titanium tetrachloride. Generally, each mixture was stirred about 1 hour at

ambient temperature, e.g., about 25°C, and then filtered. The filter cake was washed with portions of dry n-hexane and dried under a nitrogen purge. The dry powdery product was sieved through a 50 mesh screen to remove the larger particles.

The quantities of components employed, weight ratios of catalyst A to $TiCl_4$ and Catalysts B obtained are given in Table 3.

TABLE 3
Preparation of catalysts B

| Catalyst designation | Catalyst A No. | Catalyst A grams | $TiCl_4$ grams | Weight ratio $TiCl_4$/Catalyst A | Hydrocarbon used ml. Reaction diluent | Hydrocarbon used ml. Wash | Reaction time min. | Recovered product grams | Recovered product color |
|---|---|---|---|---|---|---|---|---|---|
| B-1 | A-1 | 1.014 | 4.992 | 4.9:1 | 20 | 20 | 60 | 0.796 | grayish |
| B-2[8] | A-2 | 25.140 | 129.450 | 5.1:1 | 460 | 500 | 75 | 25.540 | brown |
| B-3 | A-3 | 1.000 | 5.000 | 5:1 | 20 | 30 | 60 | 0.771 | grayish |
| B-4 | A-4 | 0.984 | 5.000 | 5.1:1 | 20 | 30 | 25 | 0.790 | grayish |
| B-5 | A-5 | 1.000 | 5.000 | 5:1 | 20 | 30 | 60 | 1.025 | lt. brown |
| B-6 | A-6 | 1.000 | 5.000 | 5:1 | 20 | 30 | 60 | 0.870 | grayish |
| B-7 | A-7 | 1.000 | 5.000 | 5:1 | 20 | 30 | 60 | 0.695 | white |
| B-8[9] | A-8 | 25.440 | 146.710 | 5.8:1 | 550 | 300 | 60 | 27.498 | brown |
| B-9 | A-9 | 1.210 | 6.000 | 5:1 | 20 | 20 | 60 | 1.095 | lt. brown |
| B-10 | A-10 | 2.000 | 10.000 | 5:1 | 40 | 45 | 60 | 1.639 | yellow-brown |

Notes:

[8] 21.040 grams of recovered product were diluted with 84.054 grams of 50 mesh polyethylene fines dried in a vacuum oven and the mixture was roll milled overnight (approx. 13 hours). Mixed catalyst consists of about 1 part by weight active component and 4 parts by weight diluent. The mixture was kept under $N_2$.

[9] 27.498 grams of recovered product were diluted with 108.502 grams of dry polyethylene fines and processed as described in footnote (8). The mixture was kept under $N_2$. Mixed catalyst consists of about 1 part by weight active component and 3.95 parts by weight diluent.

Elemental analyses of catalyst A-2 and B-2 (not mixed with polyethylene fines) were performed and the results obtained are shown below in terms of wt. % of each element:

| Element | Catalyst A-2 | Catalyst B-2 |
|---|---|---|
| Carbon | 17.5 | 10.1 |
| Hydrogen | 5.0 | 2.6 |
| Chlorine | 39.4 | 54.7 |
| Oxygen[10] | 16.2 | 10.9 |
| Titanium | 11.9 | 13.0 |
| Magnesium | 7.6 | 7.2 |
| Aluminum | 2.4 | 1.5 |

[10]The amount of oxygen was determined by subtracting total weight of other components from the total weight of the catalyst sample.

The results indicate that treating catalyst A compositions with $TiCl_4$ has some effect on the amount of the elements making up the compositions. The Ti concentration increased 1.1 wt. % and chlorine concentration increased 15.3 wt. % at the expense of carbon, hydrogen and oxygen in particular.

From the above results it is believed that the halide ion exchanging source, which in this instance was titanium tetrachloride, caused an exchange of chloride for ethoxide groups in the catalyst.

Catalysts A-2 and B-2 were also examined by powder X-ray diffraction and X-ray photoelectron spectroscopy to measure the surface composition and bulk crystalline phases.

The results indicated no significant differences in the elemental composition of the surface within experimental error. However, Catalyst B-2 appeared to be amorphous whereas Catalyst A-2 appeared to have a highly crystalline component present with a low surface area.

Ethylene polymerization with Catalysts A-1 to A-10 and B-1 to B-10

A 3.8 liter, stirred, stainless steel reactor was employed for ethylene polymerization. The reactor was conditioned for each run by charging to it 3 liters of dry n-heptane, closing the port, and heating the reactor and contents at 175°C for 30 minutes. The reactor was drained and residual heptane purged with dry nitrogen. The reactor was then closed and cooled under nitrogen pressure.

The conditioned reactor was purged with dry isobutane vapor and 3 ml of the cocatalyst solution containing 15 wt. % triethylaluminum (TEA) in dry n-heptane (2.8 mmoles TEA) was charged followed by addition of the catalyst. The reactor was closed, about 2.1 liters of dry isobutane was charged, the reactor and contents were heated to 80°C and the ethylene and hydrogen, if used, was added.

Each run was terminated by flashing the ethylene and isobutane and hydrogen, if present, from the reactor. The polymer was then recovered, dried and weighed to obtain the yield.

Each polymer yield was divided by the weight of catalyst employed to determine the calculated catalyst productivity which is expressed as kilograms (kg) polyethylene per gram (g) catalyst per hour. In some runs of less than 60 minutes duration, a productivity figure is calculated for 60 minutes in which the reasonable assumption is made based on past experience that the activity of the catalyst remains unchanged during at least the first 60 minutes of each run. When the catalyst is diluted, a calculated productivity based on kg polyethylene produced per gram diluted catalyst per hour is given as well as kg polyethylene produced per gram catalyst contained in the mixture per hour.

The quantity of each catalyst employed, run time, pressures employed, and results obtained are presented in Table 4.

TABLE 4
Ethylene polymerization at 80°C
2.8 MMoles TEA (3 ml) as Cocatalyst in each run

| Run No. | Catalyst Designation | Catalyst grams | Run time min. | Polyethylene yield grams | Catalyst productivity kg polymer/g catalyst/hour | | Avg. MPa | Total psig | Reaction pressures Ethylene MPa | Reaction pressures Ethylene psig | Hydrogen MPa | Hydrogen psig |
|---|---|---|---|---|---|---|---|---|---|---|---|---|
| 1 | A-1 | 0.0146 | 60 | 479 | 32.8 | | 1.79 | 260 | 0.69 | 100 | 0 | 0 |
| 2 | A-2 | 0.0093 | 60 | 330 | 35.5 | | 1.93 | 280 | 0.69 | 100 | 0 | 0 |
| 3 | A-3 | 0.0199 | 60 | 270 | 13.6 | | 1.93 | 280 | 0.69 | 100 | 0 | 0 |
| 4 | A-4 | 0.0210 | 60 | 690 | 32.9 | | 1.93 | 280 | 0.69 | 100 | 0 | 0 |
| 5 | A-5 | 0.0198 | 60 | 504 | 25.5 | | 1.93 | 280 | 0.69 | 100 | 0 | 0 |
| 6 | A-6 | 0.0218 | 60 | 68 | 3.1 | | 1.93 | 280 | 0.69 | 100 | 0 | 0 |
| 7 | A-7 | 0.0134 | 60 | 119 | 8.9 | | 2.00 | 290 | 0.69 | 100 | 0 | 0 |
| 8 | A-8 | 0.0167 | 60 | 480 | 28.7 | | 1.93 | 280 | 0.69 | 100 | 0 | 0 |
| 9 | A-9 | 0.0113 | 60 | 233 | 20.6 | | 1.93 | 280 | 0.69 | 100 | 0 | 0 |
| 10 | A-10 | 0.0054 | 60 | 112 | 20.7 | | 1.93 | 280 | 0.69 | 100 | 0 | 0 |
| 11 | B-1 | 0.0039 | 60 | 577 | 148 | | 1.79 | 260 | 0.69 | 100 | 0 | 0 |
| 12 | B-2(11) | 0.0121 | 60 | 355 | 147 | (29.33 kg/g cat) | 2.00 | 290 | 0.69 | 100 | 0 | 0 |
| 13 | B-3(12) | 0.0116 | 30 | 631 | 109 | (54.4 kg/30 min) | 1.97 | 285 | 0.69 | 100 | 0 | 0 |
| 14 | B-3(13) | 0.0085 | 30 | 510 | 120 | (60.0 kg/30 min) | 1.93 | 280 | 0.69 | 100 | 0 | 0 |
| 15 | B-4(14) | 0.0051 | 40 | 424 | 125 | (83.1 kg/40 min) | 1.97 | 285 | 0.69 | 100 | 0 | 0 |
| 16 | B-5 | 0.0053 | 60 | 387 | 73.0 | | 1.97 | 285 | 0.69 | 100 | 0 | 0 |
| 17 | B-6(15) | 0.0118 | 45 | 787 | 88.9 | (66.7 kg/45 min) | 2.00 | 290 | 0.69 | 100 | 0 | 0 |
| 18 | B-7 | 0.0144 | 60 | 538 | 37.4 | | 2.41 | 350 | 1.0 | 150 | 0.41 | 60 |
| 19 | B-8(16) | 0.0220 | 60 | 162 | 36.4 | (7.34 kg/g cat) | 2.41 | 350 | 1.0 | 150 | 0.41 | 60 |
| 20 | B-9(17) | 0.0123 | 40 | 688 | 83.8 | (55.9 kg/40 min) | 1.93 | 280 | 0.69 | 100 | 0 | 0 |
| 21 | B-10 | 0.0029 | 60 | 610 | 210 | | 1.97 | 285 | 0.69 | 100 | 0 | 0 |

Notes:
(11) One part by weight catalyst diluted with 4 parts by weight polyethylene powder; calculated productivity is 5×29.3 or 147 kg polymer/g undiluted catalyst.
(12) 30 minute run time, calculated productivity is 54.4×60÷30 kg/g cat or 109 kg/g cat/hour.
(13) 30 minute run time, calculated productivity is 60×60÷30 kg/g cat or 120 kg/g cat/hour.
(14) 40 minute run time, calculated productivity is 83.1×60÷40 kg/g cat or 125 kg/g cat/hour.
(15) 45 minute run time, calculated productivity is 66.7×60÷45 kg/g cat or 88.9 kg/g cat/hour.
(16) One weight part catalyst diluted with 3.95 parts by weight polyethylene powder; calculated productivity is 4.95×7.36 or 36.4 kg polymer/g undiluted catalyst.
(17) 40 minute run time, calculated productivity is 55.9×60÷40 kg/g cat or 83.8 kg/g cat/hour.

The results given in Table 4 indicate that the Comparative A catalysts are not nearly as active as the inventive B catalysts which are formed from the corresponding A catalysts by a $TiCl_4$ treatment. In terms of kg polyethylene produced per g (undiluted) catalyst per hour, the indicated A catalysts generally produce from 3 to 36 kg polymer whereas their B counterparts generally produce from 36 to 210 kg polymer. It is also noted in this regard that catalysts B-6 and B-7 (runs 18 and 19) showed exceptionally high productivities as compared to their corresponding "A" catalysts, catalysts A-6 and A-7 (runs 6 and 7).

The best results under the conditions employed, were obtained in run 21 employing catalyst B-10 produced from catalyst A-10 composition prepared from a titanium ethoxide-magnesium dichloride reaction product treated with ethyl-aluminum sesquichloride. This B-10 catalyst was extremely active and produced 210 kg polyethylene per gram of catalyst per hour.

Example 2

Catalyst A preparation (comparative)

All mixing and filtering operations were performed in a dry box under an argon atmosphere employing a dry hydrocarbon as the reaction medium. Anhydrous magnesium dichloride and titanium tetraethoxide were charged to a flask equipped for refluxing and stirring and containing the chosen reaction medium. Each mixture was heated at the temperature and for the time indicated in Table 5 and cooled to the temperature indicated for the dropwise addition of the 0.783 molar solution of ethylaluminum sesquichloride in n-heptane. The resulting slurry was generally stirred an additional 30 minutes after the reaction was completed, stirring was discontinued and the mixture allowed to warm to room temperature, if cooling had been employed. The slurry was suction filtered to produce a filter cake which was washed with portions of dry n-hexane and dried under an argon purge to produce the product.

The quantities of materials employed, weight and mole ratios of reactants charged and Catalysts A obtained are presented in Table 5.

TABLE 5
Preparation of catalysts A

| Catalyst designation | A-11 | A-12 | A-13 | A-14 | A-15 | A-16[a] | A-17 |
|---|---|---|---|---|---|---|---|
| $MgCl_2$ | | | | | | | |
| grams | 1.90 | 1.90 | 9.52 | 1.92 | 1.92 | 946 | 11.4 |
| mole | 0.020 | 0.020 | 0.100 | 0.020 | 0.020 | 9.94 | 0.120 |
| $Ti(OC_2H_5)_4$ | | | | | | | |
| grams | 9.12 | 9.11 | 45.40 | 9.39 | 9.10 | 4309 | 55.5 |
| mole | 0.040 | 0.040 | 0.200 | 0.041 | 0.040 | 18.9 | 0.244 |
| Reaction medium | | | | | | | |
| type | n-hexane | xylenes | xylenes | n-hexane | n-hexane | n-hexane | xylenes |
| ml | 100 | 70 | 250 | 75 | 110 | 60.6 liters | 100 |
| temperature, °C | 108 | 107 | 110 | 110 | 105 | 84 | 110 |
| heating time, minutes | 30 | 30 | 30 | 30 | 40 | 45 | 60 |
| Ethylaluminum sesquichloride | | | | | | | |
| ml | 25 | 25 | 125 | 42 | 42 | 12.5 l | 301[b] |
| mole | 0.020 | 0.020 | 0.098 | 0.033 | 0.033 | 12.7 | 0.24 |
| reaction temperature, °C | 25 | −18 | −20 to −25 | −25 | −27 | 21 to 30 | −23 to −25 |
| reaction time, minutes | 90 | 80 | 270 | 135 | 280 | 120 | 240 |
| Wash liquid | | | | | | | |
| ml | 30 | 30 | 150 | 120 | 120 | 4,57 liter[d] | 300[c] |
| Mole ratios | | | | | | | |
| Ti/Mg | 2:1 | 2:1 | 2:1 | 2:1 | 2:1 | 1.9:1 | 2:1 |
| Ti/EASC | 2:1 | 2:1 | 2:1 | 1.2:1 | 1.2:1 | 1.5:1 | 1:1 |
| Recovered product | | | | | | | |
| grams | 5.21 | 4.51 | 20.95 | 6.33 | 6.25 | not recovered | 39.53 |
| color | white | tan | white | tan | tan | not determined | light purple |

[a]Several batches of catalysts were made under the conditions shown which were combined and are identified as A-16

[b]Add to 200 ml of xylenes cooled to −26°C and resting in a $CCl_4$/dry ice bath, the solution of $MgCl_2/Ti(OC_2H_5)$ cooled to 25°C followed by the solution of EASC in a dropwise manner.

[c]Washed filter cake with 50 ml xylenes, then 250 ml of n-hexane.

[d]Used 4,57 liter portions, decanting liquid off product after each addition.

Catalyst B preparation (invention)

All mixing and filtering operations were conducted in a dry box under an argon atmosphere employing dry n-hexane as the reaction medium. To a flask equipped for stirring and reflux was charged n-hexane, the Catalyst A and titanium tetrachloride. Each mixture was stirred at the temperature and for the time indicated in Table 6, cooled to room temperature, if needed, and then suction filtered. The filter cake was washed with portions of dry n-hexane and dried under an argon purge.

The quantities of components employed, weight ratios of Catalyst A to $TiCl_4$ and results obtained are given in Table 6.

TABLE 6
Preparation of Catalyst B

| Catalyst designation | Catalyst A No. | Catalyst A Grams | $TiCl_4$ grams | Weight Ratio $TiCl_4$/Catalyst A | Reaction condition Time min. | Reaction condition Max. temp. °C | n-Hexane, ml Reaction medium | n-Hexane, ml Wash | Recovered product Grams | Recovered product Color |
|---|---|---|---|---|---|---|---|---|---|---|
| B-11 | A-11 | 2.22 | 8.9 | 4:1 | 60 | 112 | 11 | 30[a] | 1.70 | lt. purple |
| B-12 | A-12 | 2.05 | 8.0 | 3.9:1 | 60 | 116 | 10 | 30[a] | 1.83 | lt. purple |
| B-13-0 | A-13 | 3.00 | 12.0 | 4:1 | 60 | 182 | 15 | 50 | 3.58 | yellow |
| B-13-1 | A-13 | 3.00 | 12.0 | 4:1 | 80 | 80 | 15 | 30 | 2.55 | white |
| B-13-2 | A-13 | 3.00 | 12.0 | 4:1 | 75 | 132 | 15 | 30 | 2.71 | lt. yellow |
| B-13-3 | A-13 | 2.00 | 7.7 | 3.85:1 | 60 | 25 | 10 | 30[a] | 1.61 | white |
| B-14 | A-14 | 2.19 | 7.7 | 3.5:1 | 60 | 122 | 15 | 30 | 2.10 | brown |
| B-15 | A-15 | 2.03 | 7.7 | 3.8:1 | 60 | 105 | 10 | 30[a] | 1.99 | lt. purple |
| B-16 | A-16 | 5225[a] | 9072 | 1.7:1 | 60 | 25 | 18.9 l. | 4, 57 l. portions | 2470[a] | brown |
| B-17 | A-17 | 39.53 | 154.0 | 3.9:1 | 55 | 110 | 200 | 200 | 33.36 | lt. purple |
| B-18 | A-11 | 0.79 | 3.4 | 4.3:1 | 60 | 25 | 5 | 30[a] | 0.69 | grayish |

Note: [a] Estimated

Ethylene polymerization

A 3.8 liter, stirred, stainless steel reactor as described and conditioned in Example 1 was employed for ethylene polymerization.

The conditioned reactor for each run was purged with dry isobutane vapor and 1 ml of the cocatalyst solution containing 15 wt. % triethylaluminum (TEA) in dry n-heptane (0.93 mmoles TEA) was charged followed by addition of the catalyst. The reactor was closed, about 2 liters of dry isobutane was charged, the reactor and contents were heated to 80°C and the ethylene was added. Hydrogen was not present in any of the runs, thus each of the polymers produced had a melt index of less than 0.5. Unless indicated to the contrary in Table 7, a run time of 60 minutes was observed in each run.

Each run was terminated and the polymer recovered as described in Example 1. If a run time of less than 60 minutes was employed, a calculated productivity figure for 60 minutes is employed as described in Example 1.

The particle size distribution of the recovered polymer as made and/or ground in a Waring Blendor was determined by placing about 100 grams of the polymer on a set of mechanically agitated sieves. The sieve set consisted of sieves having the mesh sizes 0.59, 0.30, 0.18, 0.15, 0.074 mm and the bottom pan (U. S. Sieve Series of 30, 50, 80, 100, 200 mesh). Agitation was conducted for 30 minutes unless indicated otherwise and the amount of polymer remaining on each sieve and in the pan was determined by weighing. The ground samples were agitated for 2 minutes at high speed at room temperature in a Waring Blendor. The purpose of grinding the as made polymer is to simulate the attrition polymer particles appear to receive in a large scale reactor such as a loop reactor, for example, since commercially formed polymer particles are generally subjected to substantial agitation which results in the production of finer particles as compared to those made on the bench scale.

Grinding the polymer in a Waring Blendor as referred to above and throughout this application is carried out by grinding 100 grams of the polymer fluff in a dry condition at room temperature (25°C) for 2 minutes using the highest speed on a Waring Blendor Model 31DL42 manufactured by Waring Products Division, Dynamics Corporation of America, New Hartford, Connecticut. Although most any grinder or blender suitable for vigorously agitating relatively small quantities of polymer can be used, the Waring Blendor described above worked very well.

The ground fluff is then screened for 15 minutes. An electric Ro-Tap Sieve Shaker manufactured by the U.S. Tyler Manufacturing Company, Cleveland, Ohio, was used; however, most any sieve shaker could be used or the polymer could be sieved by hand.

The quantity of each catalyst employed and results obtained are given in Table 7.

In each run the initial ethylene pressure was 0.69 MPa (98.5 psig), and the average total pressure was 1.9 MPa (271.4 psig) for all runs except runs 24 and 26 in which it was 2.0 MPa (285.7 psig).

TABLE 7
Effect of catalyst formation conditions on polymer particle size and productivity

| Run No. | Catalyst formation: Reaction medium | Catalyst formation: EASC °C | Catalyst formation: $TiCl_4$ °C | Catalyst: Weight grams | Catalyst: No. | Calculated productivity Kg/g/hr[a] | Polymer: Yield grams | Polymer: Wt. % Coarser than 100 mesh as made | Polymer: Wt. % Coarser than 100 mesh ground |
|---|---|---|---|---|---|---|---|---|---|
| 22 | n-hexane | 25 | 112 | 0.0023 | B-11 | 193.5 | 445 | 82 | 59 |
| 23 | n-hexane | –25 | 122 | 0.0050 | B-14 | 107.8 | 539 | 81[d] | 54[d] |
| 24 | n-hexane | –25 | 105 | 0.0034 | B-15 | 248.5[b] | 507 | —[e] | 46[d] |
| 25 | xylenes[f] | –24 | 25 | 0.0036 | B-13-3 | 161.7 | 582 | 95 | 82 |
| 26 | xylenes | –24 | 80 | 0.0068 | B-13-1 | 97.5 | 663 | 93 | — |
| 27 | xylenes | –18 | 116 | 0.0053 | B-12 | 162.1[c] | 573 | 91 | 85 |
| 28 | xylenes | –24 | 132 | 0.0067 | B-13-2 | 82.7 | 554 | 96 | 89 |
| 29 | xylenes | –25 | 180 | 0.0099 | B-13-0 | 19.8 | 196 | 99.8 | 95 |
| 30 | n-hexane | 25 | 25 | 0.0045 | B-18 | 144 | 647 | —[e] | 34 |

[a] kg polymer per g catalyst per hour.
[b] Run time of 36 minutes giving 507 g polymer. Productivity for 60 minutes is calculated to be 149.1 kg/g/36 min.×60 min.÷36 min. or 248.5 kg/g/60 min.
[c] Run time of 40 minutes giving 573 g polymer. Productivity for 60 minutes is calculated to be 108.1 kg/g/40 min.×60 min.÷40 min. or 162.1 kg/g/60 min.
[d] Sieve agitation for 15 minutes was employed.
[e] A dash signifies no determination was made.
[f] Analytical reagent quality, 137°—144°C boiling point range.

Inspection of the results presented in Table 7 shows that the reaction conditions employed in forming the catalyst are of importance from a productivity standpoint of polymer produced per unit catalyst weight per hour as well as from a particle size distribution of the polymer. The most productive catalysts appear to result as shown in runs 22—24 when the precursor catalyst A is formed in a paraffin reaction medium at temperatures ranging from —25° to 25°C and the final catalyst (catalyst B) is formed by contact of catalyst A with $TiCl_4$ at temperatures ranging from 100° to 125°C. These catalysts form relatively coarse polymer as made consisting approximately of 80 wt. % coarser than 0.15 mm (100 mesh). The polymer is somewhat friable in nature, however, since after grinding it in a Waring Blendor for 2 minutes the amount of coarse polymer remaining consists of about 45 to 60 wt. % coarser than 0.15 mm.

When catalyst A is made in an aromatic reaction medium at about —20° to —25°C and catalyst B is formed by contact of catalyst A with $TiCl_4$ at temperatures ranging from 80° to 180°C the particle size of as made polymer and ground polymer is coarser in nature as the results of runs 25—29 demonstrate. The coarsest, most attrition resistant polymer was made with catalyst B formed by contact with $TiCl_4$ at 180°C. However, the productivity of this catalyst was substantially lower as compared to the other catalysts of runs 25—29. The data in runs 25—29 indicate that when the precursor catalyst A is formed at about —25°C and catalyst B is formed from catalyst A at temperatures from 80° to 130°C said catalyst B is capable of producing coarse, attrition resistant polymer at high rates in a slurry polymerization process.

All of the polymers shown in Table 7 have relatively low melt index values, i.e., less than about 0.5, as determined in accordance with the procedure of ASTM D1238-65T, condition E.

Example 3

Ethylene polymerization with Catalyst B-16 of Example 2—Effect of cocatalyst level

A 3.8 liter, stirred, stainless steel reactor as described and conditioned in Example 4 was employed for ethylene polymerization.

The conditioned reactor for each run was purged with dry isobutane; the indicated quantity of cocatalyst solution containing 15 wt. % triethylaluminum (TEA) in dry n-heptane (1 molar) was charged followed by addition of the catalyst. A portion of catalyst B-16 was used in each run. The reactor was closed, about 2 liters of dry isobutane was charged, the reactor and contents were heated to 100°C and the ethylene and hydrocarbon were charged. Run times of 60 minutes were employed.

Each run was terminated and the polymer recovered as described in Example 1. The particle size distribution of the as made and/or ground polymer was determined as described in Example 2.

The quantity of each catalyst and cocatalyst employed, the melt index of each polymer and the results obtained are given in Table 8.

In each run, the initial hydrogen pressure was 0.34 MPa (50 psig), the initial ethylene pressure was 1.4 MPa (200 psig) and the total pressure attained during polymerization was 3.4 MPa (500 psig) except for run 35 which it was 3.3 MPa (485 psig).

TABLE 8
Effect of cocatalyst concentration on polymer particle size

| Run No. | Catalyst Wt. g | mmoles | g | ppm[a] | Wt. ratio Cocat./ catalyst | Calculated productivity kg/g/hr | Polymer Yield g | Polymer MI[b] | Polymer HLMI[c]/MI | Weight percent coarser than 0.15 mm As made | Weight percent coarser than 0.15 mm Ground |
|---|---|---|---|---|---|---|---|---|---|---|---|
| 31 | 0.0059 | 0.2 | 0.023 | 21 | 3.9 | 51.4 | 303 | 1.1 | 29 | —[e] | 66 |
| 32 | 0.0051 | 0.25 | 0.029 | 26 | 5.7 | 24.7 | 126 | 0.4 | 31 | 99 | 45 |
| 33 | 0.0052 | 0.3 | 0.035 | 31 | 6.7 | 63.5 | 330 | 0.6 | 31 | — | 87 |
| 34 | 0.0057 | 0.5 | 0.058 | 52 | 10 | 44.6 | 254 | 1.7 | 25 | — | 66 |
| 35 | 0.0099 | 0.5 | 0.058 | 52 | 5.9 | 39.7 | 393 | 1.6 | 27 | 99 | 88 |
| 36 | 0.0068 | 1.0 | 0.115 | 104 | 17 | 38.6 | 249 | 4.0 | 28 | 99 | 73 |
| 37 | 0.0071 | 2.0 | 0.230 | 208 | 32 | 38.7 | 275 | 2.1 | 29 | — | 84 |
| 38 | 0.0072 | 5.0 | 0.576 | 520 | 80 | 34.2 | 246 | 1.3 | 28 | 99 | 95 |

[a] Parts per million based on the weight of 2 liters of isobutane (1100 g).
[b] MI is melt index, g/10 minutes, ASTM D1238-65T, condition E.
[c] HLMI is high load melt index, g/10 minutes, ASTM D1238-65T, condition F. The ratio, HLMI/MI, is believed to relate to molecular weight distribution. The higher the value, the broader the distribution.
[d] The levels of TEA cocatalyst employed in the runs can be related to an approximate mole ratio of TEA to Ti in the above catalysts ranging from about 10:1 to about 450:1.
[e] A dash signifies no determination was made.

The data given in Table 8 show that the coarse polymer as made is produced at all of the cocatalyst levels employed. The trends observed in runs 31—38 indicates that more attrition resistant polymer is formed as the cocatalyst level increaase based on the ground polymer results. At the same time, however, the productivity of the catalyst appears to diminish somewhat as the cocatalyst level increases. Since aluminum alkyl cocatalysts are relatively expensive materials it is desirable to use the least amount of cocatalyst consistent with high polymer production and low cocatalyst residues as well as the production of attrition resistant polymer. The results indicate that the objective is reached with the materials and conditions employed when the cocatalyst level ranges between 20 to 200 ppm TEA (wt. ratio of cocatalyst to catalyst of 4:1 to 40:1), more preferably between 30 to 100 ppm (wt. ratio of cocatalyst to catalyst of 6:1 to 35:1).

Melt index determinations of the produced polymer clearly show that commercially useful material was produced since many applications exist for polymers in the 0.4 to 4 melt index range including film, sheet, pipe, bottles, containers, and the like. The HLMI/MI ratios shown are indicative of relatively narrow molecular weight distribution polymer. Ethylene polymers with such molecular weight distribution are especially suitable for injection molding.

Example 4
A. Catalyst A preparation
B. Catalyst B preparation
C. Ethylene polymerization in presence of hydrogen

A. A series of Catalyst A (precursor catalyst) was prepared generally in the manner indicated previously as in Example 2. The quantities of reactants employed, reaction conditions used, and results obtained are given in Table 9.

B. Catalyst B was prepared generally in the manner described in Example 2 by contacting a weighed portion of the Catalyst A series with $TiCl_4$. The quantities of reactants employed, reaction conditions utilized, and results obtained are shown in Table 9B. A series of ethylene polymerization runs were carried out generally as described in Example 2 using each catalyst B shown in Table 9B; however each polymerization run was carried out in the presence of hydrogen in order to produce a higher melt index polymer. The polymers produced and the conditions employed are shown in Table 9C.

TABLE 9A
Preparation of Catalysts A (precursor)

| Catalyst designation | A-19 | A-20 | A-21 | A-22 |
|---|---|---|---|---|
| $MgCl_2$ | | | | |
| grams | 1.90 | 9.52 | 11.40 | 5.80 |
| mole | 0.020 | 0.100 | 0.120 | 0.061 |
| $Ti(OC_2H_5)_4$ | | | | |
| grams | 9.10 | 45.40 | 56.19 | 28.23 |
| mole | 0.040 | 0.200 | 0.246 | 0.124 |
| Reaction medium | | | | |
| type | n-hexane | xylenes | xylenes | xylenes |
| ml | 100 | 250 | 300 | 150 |
| temp., °C | 97 | 110 | 120 | 120 |
| heating time, min. | 30 | 30 | 40 | 35 |
| Ethylaluminum sesquichloride | | | | |
| ml | 25 | 125 | 220 | 77.5 |
| mole | 0.020 | 0.098 | 0.170 | 0.060 |
| reaction temp., °C | +25 | −20 to −25 | −25 to −35 | −21 to −27 |
| reaction time, min. | 95 | 270 | 8.6 hours | 205 |
| Wash liquid | n-hexane | n-hexane | n-hexane | n-hexane |
| ml | 100 | 100 | 400 | 1000 (4-250 portions) |
| Mole ratios | | | | |
| Ti/Mg | 2:1 | 2:1 | 2:1 | 2:1 |
| Ti/EASC | 2:1 | 2:1 | 1.4:1 | 2:1 |
| Recovered product | | | | |
| grams | 2.10 | 2.55 | not determined | not determined |
| color | brown | white | brown | brown |

TABLE 9B
Preparation of Catalysts B

| Catalyst desig. | Catalyst A No. | Catalyst A Grams | $TiCl_4$ grams | Wt. ratio $TiCl_4$/Cat. A | Reaction conditions Time min. | Reaction conditions Max. temp. °C | N-Hexane, ml Reaction medium | N-Hexane, ml Wash medium | Recovered grams | Product color |
|---|---|---|---|---|---|---|---|---|---|---|
| B-19 | A-19 | 5.05 | 10.4 | 2.1:1 | 60 | 25 | 25 | 30 | 4.71 | brown |
| B-20 | A-20 | 3.00 | 12 | 4:1 | 60 | 80 | 15 | ″ | 2.55 | white |
| B-21 | A-21 | 31.9[a] | 128 | 4:1 est. | 60 | 122 | 150 | 400 est. | 32.55 | lt. purple |
| B-22 | A-12 | 2.11 | 7.9 | 3.7:1 | 60 | 25 | 10 | 45 | 1.90 | gray |

[a] Estimated yield based on previous experiments.

TABLE 9C
Ethylene polymerization, hydrogen present, 1 Mmole TEA
effect of catalyst formation on productivity and polymer particle size

| Run No. | Catalyst formation Reaction medium | Catalyst formation EASC °C | Catalyst formation $TiCl_4$ °C | Catalyst No. | Catalyst Weight grams | Pressures, MPa[c] Ethylene | Pressures, MPa[c] Hydrogen | Pressures, MPa[c] Total reactor | Polymer Calculated productivity kg/g/hr | Polymer Yield grams | Polymer Melt index | Polymer Wt. % coarser than 100 mesh (ground) |
|---|---|---|---|---|---|---|---|---|---|---|---|---|
| 39 | n-hexane | 25 | 25 | B-19 | 0.0212 | 1.48 | 0.446 | 3.41 | 21.7 | 461 | 3.6 | 57 |
| 40 | ″ | ″ | ″ | ″ | 0.0183 | ″ | 0.892 | 3.62 | 8.42[a] | 154[a] | 4.7 | 33 |
| 41 | ″ | ″ | ″ | ″ | 0.0195 | ″ | ″ | ″ | 26.6[b] | 518[b] | 13 | 58 |
| 42 | ″ | | ″ | ″ | 0.0156 | ″ | ″ | 3.55 | 12.4 | 194 | 19 | 48 |
| 43 | ″ | −18 | 25 | B-22 | 0.0061 | ″ | ″ | ″ | 48.5 | 296 | 12 | 57 |
| 44 | xylenes | −25 to −35 | 122 | B-21 | 0.0077 | ″ | 0.446 | 3.62 | 45.7 | 352 | 0.17 | 92.5 |
| 45 | ″ | ″ | ″ | ″ | 0.0117 | ″ | 0.892 | 3.76 | 36.4 | 426 | 3.2 | 67 |
| 46 | ″ | ″ | ″ | ″ | 0.0133 | 1.20 | 1.14 | 3.69 | 34.7 | 461 | 11 | 63 |
| 47 | ″ | −20 to −25 | 80 | B-20 | 0.0119 | 1.48 | 0.892 | 3.55 | 15.1 | 180 | 13 | 65 |

[a] Run time is 2-1/4 hours, productivity of kg/g/2-1/4 hours.
[b] Run time is 2 hours, productivity of kg/g/2 hours.
[c] Absolute pressures.

The effects of a low mixing temperature and a high treating temperature on the catalysts B of the invention with respect to polymer particle size and attrition resistance are demonstrated in the results of the runs shown in Table 7 in which a low melt index polymer was produced and in runs 44—47 of Table 9C in which a relatively high melt index polymer was produced with Catalysts B. It has been observed from past experience that grinding tests made on polymer formed with the catalysts of the present invention result in less coarse polymer (more fines) when the polymer melt index is above about 1. Also, a leveling effect appears to take place when the melt index ranges from about 5 to at least 40. The amount of coarse polymer after grinding generally amounts from 80 to 95 wt. % for low melt index polymer and from 60 to 70 wt. % for high melt index polymer. Therefore, it is currently believed that a catalyst can be more accurately evaluated for potential commercial use (in absence of a commercial run) by preparing relatively high melt index polymer (5 to 40 melt index) as compared to a low melt index polymer on a bench scale.

A comparison of the results of inventive runs 39—42 with inventive runs 44—47 of Table 9C shows in general that catalysts prepared by contacting a solution of $Ti(OR)_4$—$MgCl_2$ contained in a paraffin, e.g. n-hexane, with an organoaluminum compound at about room temperature or lower and treating the isolated particulate product with $TiCl_4$ at room temperature or higher produce relatively less coarse polymer (more fines) as compared to the preferred catalysts of the invention.

Thus, the preferred catalysts of this invention which produce large and attrition resistant polymer particles are formed by employing an aromatic solvent and low temperatures (0°C to −100°C) to produce precursor catalyst A and an elevated temperature (80°C to 180°C) to produce catalyst B. The low temperatures utilized in preparing catalyst A is beneficial in reducing fines (increasing coarser polymer particles) in polymerization runs with the finished catalysts. The conditions favor the production of catalyst particles which are uniform in size and generally spherically shaped. An elevated temperature used to form catalyst B appears to set or harden catalyst A particles. The over-all effect results in a catalyst that is capable of producing large, attrition resistant polymer spheres at very high polymer productivities.

## Claims

1. A process of producing a polymerization catalyst which comprises reacting in an inert solvent or diluent (A) a metal halide compound selected from metal dihalides and metal hydroxyhalides of metals of Group IIA or IIB of the Mendeleev Periodic Table, and (B) a titanium compound, the titanium metal being bonded to at least one oxygen, nitrogen or sulfur atom, said oxygen, nitrogen or sulfur atoms in turn being bonded to a carbon atom of a carbon containing radical, to obtain a first catalyst component, and then precipitating said first catalyst component with a second catalyst component which is an organometallic compound of a metal of Group I, II or III of the Mendeleev Periodic Table, characterized by treating the solid product resulting from the combination of said first and second catalyst components with (C) a transition metal halide as halide ion exchanging source.

2. The process of claim 1, characterized in that said transition metal halide (C) is titanium tetrachloride.

3. The process of claim 1 or 2, characterized in that said titanium compound (B) is selected from titanium tetrahydrocarbyl oxides, titanium tetraimides, titanium tetraamides and titanium tetramercapides, and said metal dihalide is selected from beryllium dichloride, beryllium dibromide, magnesium dichloride, magnesium dibromide, magnesium diiodide, magnesium difluoride, calcium dichloride, calcium dibromide, zinc dichloride, and zinc difluoride.

4. The process of claim 3, characterized in that said titanium tetrahydrocarbyl oxide has the general formula I

$$Ti(OR)_4 \qquad (I)$$

wherein the substituents R are the same or different and selected from alkyl, cycloalkyl, aryl, alkaryl and saturated aralkyl hydrocarbon radicals containing from 1 to 20 carbon atoms per radical.

5. The process of claim 4 characterized in that in said formula I each R is individually selected from alkyl radicals containing from 1 to 10 carbon atoms per radical.

6. The process of claim 4, characterized in that said titanium tetrahydrocarbyl oxide is titanium tetraethoxide or titanium tetra-n-butoxide.

7. The process of any of claims 1 to 6, characterized in that said metal dihalide is magnesium dichloride.

8. The process of any of claims 1 to 7, characterized in that said second catalyst component is selected from hydrocarbylaluminum halides represented by the formulas

$R'AlX_2$,
$R'_2AlX$, and
$R'_3Al_2X_3$

wherein each R' is individually selected from linear and branched chain hydrocarbyl radicals containing

from 1 to 20 carbon atoms per radical and each R′ can be the same or different, and X is a halogen atom.

9. The process of claim 8, characterized in that said second catalyst component comprises ethylaluminum sesquichloride.

10. The process of any of claims 1 to 7, characterized in that said second catalyst component is dialkylmagnesium.

11. The process of any of claims 1 to 10, characterized in that said reaction between (A) and (B) to form said first catalyst component is conducted in a hydrocarbon solvent, the first and second catalyst components are contacted together at a temperature from −100 to 0°C and the solid product resulting from the combination of said first and second catalyst components is treated with titanium tetrachloride at a temperature from 80 to 180°C.

12. The process of claim 11 characterized in that said hydrocarbon solvent is an aromatic solvent.

13. The process of claim 11 characterized in that said first and second catalyst components are contacted together at a temperature from −15 to −40°C.

14. The process of claim 11 characterized in that the treatment of said solid product with said titanium tetrachloride is effected at a temperature from 100 to 130°C.

15. The process of any of claims 1 to 14, characterized in that the molar ratio of the titanium metal of the titanium compound (B) of the first catalyst component to the metal of the metal halide compound (A) of the first catalyst component is from 10:1 to 1:10, and the molar ratio of the titanium metal of the titanium compound (B) of the first catalyst component to the second catalyst component is from 10:1 to 1:10.

16. The process of claim 15 characterized in that the molar ratio of the titanium metal of the titanium compound (B) to the metal of the metal halide compound (A) is from 2:1 to 1:2, and the molar ratio of the titanium metal of the titanium compound (B) to the second catalyst compound is from 2:1 to 1:3.

17. The process of at least one of claims 1 to 16, characterized in that the product of the reaction of (A) magnesium dichloride and (B) titanium tetraethoxide if isolated in a substantially crystalline form has a powder X-ray diffraction pattern, taken under conditions to exclude the presence of air and water, with interplanar spacings and relative intensities as follows:

| Interplanar spacing (meter×$10^{-10}$) | Relative intensity of spectrum |
|---|---|
| 10.77 | weak |
| 10.47 | very strong |
| 9.28 | very weak |
| 8.73 | weak |
| 8.23 | very strong |
| 8.10 | moderate |
| 7.91 | very strong |
| 7.43 | strong |
| 7.27 | strong |
| 6.52 | weak |
| 6.41 | weak |
| 6.10 | weak |
| 4.90 | very weak |
| 4.42 | very weak |
| 4.40 | very weak |
| 4.09 | very weak |
| 3.86 | very weak. |

18. Use of the polymerization catalyst as obtained in any of claims 1 to 17, together with a suitable organoaluminum cocatalyst, for the polymerization or copolymerization of aliphatic mono-1-olefins, conjugated diolefins and vinylaromatic monomers.

**Revendications**

1. Procédé de production d'un catalyseur de polymérisation qui consiste à faire réagir, dans un solvant ou un diluant inerte, (A) un composé d'halogénure métallique choisi parmi des dihalogénures métalliques et des hydroxyhalogénures métalliques des métaux du groupe IIA ou IIB du tableau de classification périodique des éléments (Tableau Périodique de Mendeleev) et (B) un composé de titane, le titane métallique étant lié au moins à un atome d'oxygène, d'azote ou de soufre, ces atomes d'oxygène, d'azote ou de soufre étant liés de leur côté à un atome de carbone d'un radical contenant du carbone, pour obtenir un premier composant catalytique, et puis à précipiter ce premier composant

catalytique avec un second composant catalytique qui est un composé organométallique d'un métal du groupe I, II ou III du tableau de classification périodique des éléments, caractérisé en ce qu'on traite le produit solide résultant de la combinaison du premier et du second composant catalytique avec (C) un halogénure de métal de transition, en tant que source d'échange d'ions halogénures.

2. Procédé selon la revendication 1, caractérisé en ce que l'halogénure de métal de transition (C) est le tétrachlorure de titane.

3. Procédé selon la revendication 1 ou la revendication 2, caractérisé en ce que le composé de titane (B) est choisi parmi des tétrahydrocarbylates de titane, des tétraimidures de titane, des tétra-amidures de titane et des tétramercaptides de titane, et le dihalogénure métallique est choisi parmi le dichlorure de béryllium, le dibromure de béryllium, le dichlorure de magnésium, le dibromure de magnésium, le diodure de magnésium, le difluorure de magnésium, le dichlorure de calcium, le dibromure de calcium, le dichlorure de zinc et le difluorure de zinc.

4. Procédé selon la revendication 3, caractérisé en ce que le tétrahydrocarbylate dè titane a la formule générale I

$$Ti(OR)_4 \qquad (I)$$

où les substituants R sont les mêmes ou différents et sont choisis parmi des radicaux hydrocarbonés alkyles, cycloalkyles, aryles, alkaryles et aralkyles saturés, contenant 1 à 20 atomes de carbone par radical.

5. Procédé selon la revendication 4, caractérisé en ce que, dans la formule I, chaque R est individuellement choisi parmi des radicaux alkyles contenant 1 à 10 atomes de carbone per radical.

6. Procédé selon la revendication 4, caractérisé en ce que le tétrahydrocarbylate de titane est le tétraéthylate de titane ou le tétra-n-butylate de titane.

7. Procédé selon l'une quelconque des revendications 1 à 6, caractérisé en ce que le dihalogénure métallique est le dichlorure de magnésium.

8. Procédé selon l'une quelconque des revendications 1 à 7, caractérisé en ce que le second composant catalytique est choisi parmi des halogénures d'hydrocarbylaluminium représentés par les formules:

$R'AlX_2$,
$R'_2AlX$, et
$R'_3Al_2X_3$

où chaque R' est individuellement choisi parmi les radicaux hydrocarbyles à chaîne linéaire et ramifiée contenant 1 à 20 atomes de carbone par radical et chaque R' peut être le même ou différent, et X est un atome d'halogène.

9. Procédé selon la revendication 8, caractérisé en ce que le second composant catalytique comprend du sesquichlorure d'éthylaluminium.

10. Procédé selon l'une quelconque des revendications 1 à 7, caractérisé en ce que le second composant catalytique est un dialkylmagnésium.

11. Procédé selon l'une quelconque des revendications 1 à 10, caractérisé en ce que la réaction entre (A) et (B) pour former le premier composant catalytique est conduite dans un solvant hydrocarboné, le premier et le second composant catalytique sont mis en contact à une température de −100 à 0°C et le produit solide résultant de la combinaison du premier et du second composant catalytique est traité avec du tétrachlorure de titane à une température de 80 à 180°C.

12. Procédé selon la revendication 11, caractérisé en ce que le solvent hydrocarboné est un solvent aromatique.

13. Procédé selon la revendication 11, caractérisé en ce que la réaction entre (A) et (B) est conduite à une température de −15 à −40°C.

14. Procédé selon la revendication 11, caractérisé en ce que le traitement du produit solide avec le tétrachlorure de titane est effectué à une température de 100 à 130°C.

15. Procédé selon l'une quelconque des revendications 1 à 14, caractérisé en ce que le rapport molaire entre le titane métallique du composé de titane (B) du premier composant catalytique et le métal du composé d'halogénure métallique (A) du premier composant catalytique est de 10:1 à 1:10, et le rapport molaire entre le titane métallique du composé de titane (B) du premier composant catalytique et le second composant catalytique est de 10:1 à 1:10.

16. Procédé selon la revendication 15, caractérisé en ce que le rapport molaire entre le titane métallique du composé de titane (B) et le métal du composé d'halogénure métallique (A) est de 2:1 à 1:2, et le rapport molaire entre le titane métallique du composé de titane (B) et le second composé catalytique est de 2:1 à 1:3.

17. Procédé selon au moins une des revendications 1 à 16, caractérisé en ce que le produit de la réaction de (A) le dichlorure de magnésium et de (B) le tétraéthylate de titane, s'il est isolé sous une forme sensiblement cristalline, a un cliché de poudre par diffraction aux rayons X, pris dans des conditions pour exclure la présence d'air et d'eau, avec des espacements entre plans et des intensités relatives comme suit:

| Espacement entre plan (mètre×$10^{-10}$) | Intensité relative du spectre |
|---|---|
| 10,77 | Faible |
| 10,47 | Très intense |
| 9,28 | Très faible |
| 8,73 | Faible |
| 8,23 | Très intense |
| 8,10 | Modérée |
| 7,91 | Très intense |
| 7,43 | Intense |
| 7,27 | Intense |
| 6,52 | Faible |
| 6,41 | Faible |
| 6,10 | Faible |
| 4,90 | Très faible |
| 4,42 | Très faible |
| 4,40 | Très faible |
| 4,09 | Très faible |
| 3,86 | Très faible |

18. Utilisation du catalyseur de polymérlsation comme obtenu dans l'une quelconque des revendications 1 à 17, avec un cocatalyseur organoaluminique convenable, pour la polymérisation ou la copolymérisation de mono-1-oléfines aliphatiques, de dioléfines conjuguées et de monomères vinylaromatiques.

**Patentansprüche**

1. Verfahren zur Herstellung eines Polymerisationskatalysators durch Umsetzung (A) einer Metallhalogenidverbindung, ausgewählt aus Metalldihalogeniden und Metallhydroxyhalogeniden der Metalle der Gruppe IIA oder IIB des Periodischen Systemes nach Mendelejew und (B) einer Titanverbindung, in der das Titanmetall mindestens an ein Sauerstoff-, Stickstoff- oder Schwefelatom gebunden ist, wobei die Sauerstoff-, Stickstoff- oder Schwefelatome ihrerseits an ein Kohlenstoffatom einer Kohlenstoff enthaltenden Gruppe gebunden sind, in einem innerten Lösungs- oder Verdünnungsmittel, um eine erste Katalysatorkomponente zu erhalten und anschließender Ausfällung die-ser ersten Katalysatorkomponente mit einer zweiten Katalysatorkomponente, welche eine organometallische Verbindung eines Metalles der Gruppe I, II oder III des Periodischen Systemes nach Mendelejew ist, dadurch gekennzeichnet, daß das feste aus der Kombination der ersten und zweiten Katalysatorkomponente erhaltene Produkt mit (C) einem Halogenid eines Übergangsmetalles als Halogenidionaustauscher behandelt wird.

2. Verfahren nach Anspruch 1, dadurch gekennzeichnet, daß das Übergangsmetallhalogenid (C) Titantetrachlorid ist.

3. Verfahren nach Anspruch 1 oder 2, dadurch gekennzeichnet, daß die Titanverbindung (B) aus Titantetrahydrocarbyloxiden, Titantetraimiden, Titantetraamiden und Titantetramercaptiden und das Metalldihalogenid aus Berylliumdichlorid, Berylliumdibromid, Magnesiumdichlorid, Magnesiumdibromid, Magnesiumdijodid, Magnesiumfluorid, Calciumdichlorid, Calciumdibromid, Zinkdichlorid und Zinkdifluorid ausgewählt ist.

4. Verfahren nach Anspruch 3, dadurch gekennzeichnet, daß das Titantetrahydrocarbyloxid die allgemeine Formel I

$$Ti(OR)_4 \quad (I)$$

hat, worin die Substituenten R gleich oder verschieden sind und Alkyl-, Cycloalkyl-, Aryl-, Alkaryl- und gesättigte Aralkylkohlenwasserstoffgruppen mit 1 bis 20 Kohlenstoffatome pro Gruppe bedeuten.

5. Verfahren nach Anspruch 4, dadurch gekennzeichnet, daß in Formel I jedes R einzeln aus Alkylgruppen enthaltend 1 bis 10 Kohlenstoffatome pro Gruppe ausgewählt ist.

6. Verfahren nach Anspruch 4, dadurch gekennzeichnet, daß das Titantetrahydrocarbyloxid Titantetraäthoxid oder Titantetra-n-butoxid ist.

7. Verfahren nach einem der Ansprüche 1 bis 6, dadurch gekennzeichnet, daß das Metalldihalogenid Magnesiumdichlorid ist.

8. Verfahren nach einem der Ansprüche 1 bis 7, dadurch gekennzeichnet, daß die zweite Katalysatorkomponente aus Kohlenwasserstoffaluminiumhalogeniden der Formeln

$R'AlX_2$,
$R'_2AlX$ und
$R'_3Al_2X_3$

worin jedes R' einzeln aus linearen oder verzweigtkettigen Kohlenwasserstoffgruppen enthaltend 1 bis 20 C-Atome pro Gruppe ausgewählt ist und jedes R' gleich oder verschieden sein kann und X ein Halogenatom ist, ausgewählt ist.

9. Verfahren nach Anspruch 1, dadurch gekennzeichnet, daß die zweite Katalysatorkomponente Äthylaluminiumsesquichlorid umfaßt.

10. Verfahren nach einem der Ansprüche 1 bis 7, dadurch gekennzeichnet, daß die zweite Katalysatorkomponente Dialkylmagnesium ist.

11. Verfahren nach einem der Ansprüche 1 bis 10, dadurch gekennzeichnet, daß die Reaktion zwischen (A) und (B) zur Bildung der ersten Katalysatorkomponente in einem Kohlenwasserstofflösungsmittel erfolgt, die erste und zweite Katalysatorkomponente bei einer Temperatur von —100 bis 0°C zusammengebracht werden und das feste, aus der Kombination der ersten und zweiten Katalysatorkomponente erhaltene Produkt mit Titantetrachlorid bei einer Temperatur von 80 bis 180°C behandelt wird.

12. Verfahren nach Anspruch 11, dadurch gekennzeichnet, daß das Kohlenwasserstofflösungsmittel ein aromatisches Lösungsmittel ist.

13. Verfahren nach Anspruch 11, dadurch gekennzeichnet, daß die Reaktion zwischen (A) und (B) bei einer Temperatur von —15 bis —40°C ausgeführt wird.

14. Verfahren nach Anspruch 11, dadurch gekennzeichnet, daß die Behandlung des festen Produktes mit dem Titantetrachlorid bei einer Temperatur von 100 bis 130°C ausgeführt wird.

15. Verfahren nach einem der Ansprüche 1 bis 14, dadurch gekennzeichnet, daß das Molverhältnis des Titanmetalles der Titanverbindung (B) der ersten Katalysatorkomponente zu dem Metall der Metallhalogenidkomponente (A) der ersten Katalysatorkomponente von 10:1 bis 1:10 und das Molverhältnis des Titanmetalles der Titanverbindung (B) der ersten Katalysatorkomponente zur zweiten Katalysatorkomponente von 10:1 bis 1:10 beträgt.

16. Verfahren nach Anspruch 15, dadurch gekennzeichnet, daß das Molverhältnis des Titanmetalles der Titanverbindung (B) zu dem Metall der Metallhalogenidverbindung (A) von 2:1 bis 1:2 und das Molverhältnis des Titanmetalles der Titanverbindung (B) zu der zweiten Katalysatorkomponente von 2:1 bis 1:3 beträgt.

17. Verfahren nach mindestens einem der Ansprüche 1 bis 16, dadurch gekennzeichnet, daß das Reaktionsprodukt von (A) Magnesiumdichlorid und (B) Titantetraäthoxid, wenn es in einer im wesentlichen kristallinen Form isoliert wird, unter Bedingungen, welche die Gegenwart von Luft und Sauerstoff ausschließen, ein Pulverröntgenbeugungsdiagramm mit folgenden Gitterebeneabständen und relativen Intensitäten hat:

| Gitterebeneabstand ($m \times 10^{-10}$) | Relative intensität des spektrums |
|---|---|
| 10,77 | schwach |
| 10,47 | sehr stark |
| 9,28 | sehr schwach |
| 8,73 | schwach |
| 8,23 | sehr stark |
| 8,10 | mäßig |
| 7,91 | sehr stark |
| 7,43 | stark |
| 7,27 | stark |
| 6,52 | schwach |
| 6,41 | schwach |
| 6,10 | schwach |
| 4,90 | sehr schwach |
| 4,42 | sehr schwach |
| 4,40 | sehr schwach |
| 4,09 | sehr schwach |
| 3,86 | sehr schwach. |

18. Verwendung des nach einem der Ansprüche 1 bis 17 erhaltenen Polymerisationskatalysators zusammen mit einem geeigneten Organoaluminiumcokatalysator zur Polymerisation oder Copolymerisation von aliphatischen Mono-1-Olefinen, konjugierten Diolefinen und vinylaromatischen Monomeren.